# EUROPEAN PATENT SPECIFICATION

(11) **EP 4 415 067 B1**
(45) Date of publication and mention of the grant of the patent: **28.05.2025**
(21) Application number: 24152443.8
(22) Date of filing: 17.01.2024
(51) Int. Cl.: H01M 4/04, H01M 4/133, H01M 4/134, H01M 4/38, H01M 4/587, H01M 4/1393, H01M 4/1395

(54) **NEGATIVE ELECTRODE FOR LITHIUM-ION SECONDARY BATTERY, METHOD FOR MANUFACTURING NEGATIVE ELECTRODE FOR LITHIUM-ION SECONDARY BATTERY, AND LITHIUM-ION SECONDARY BATTERY**
NEGATIVELEKTRODE FÜR LITHIUM-IONEN-SEKUNDÄRBATTERIE, VERFAHREN ZUR HERSTELLUNG EINER NEGATIVELEKTRODE FÜR LITHIUM-IONEN-SEKUNDÄRBATTERIE UND LITHIUM-IONEN-SEKUNDÄRBATTERIE
ÉLECTRODE NÉGATIVE POUR BATTERIE SECONDAIRE AU LITHIUM-ION, PROCÉDÉ DE FABRICATION D'ÉLECTRODE NÉGATIVE POUR BATTERIE SECONDAIRE AU LITHIUM-ION ET BATTERIE SECONDAIRE AU LITHIUM-ION

(30) Priority: 20.01.2023 JP 2023007382
(43) Date of publication of application: 14.08.2024
(73) Proprietor: TOYOTA JIDOSHA KABUSHIKI KAISHA, Toyota-shi, Aichi-ken, 471-8571 (JP)
(72) Inventor: SENOUE, Masaharu, Aichi-ken, 471-8571 (JP)
(74) Representative: D Young & Co LLP

(56) References cited:
- CN-A- 112 599 723
- JP-A- 2018 181 539
- JP-A- 2020 087 653
- US-A1- 2021 159 491
- US-A1- 2022 069 284

## Description

### TECHNICAL FIELD

The present application discloses a negative electrode for a lithium-ion secondary battery, a method for manufacturing a negative electrode for a lithium-ion secondary battery, and a lithium-ion secondary battery.

### BACKGROUND ART

PTL 1 discloses a negative electrode for lithium-ion secondary batteries, comprising a current collector foil, a first negative electrode mixture layer, and a second negative electrode mixture layer, wherein the first negative electrode mixture layer is arranged on the current collector foil, the second negative electrode mixture layer is arranged on the first negative electrode mixture layer, the first negative electrode mixture layer comprises graphite, a silicon oxide, and polyacrylic acid, and the second negative electrode mixture layer comprises graphite but does not comprise a silicon oxide or polyacrylic acid. PTL 2 discloses a negative electrode for lithium-ion secondary batteries, comprising a negative electrode current collector and a negative electrode active material layer, wherein the negative electrode active material layer has a first main surface and a second main surface, the first main surface is in contact with the negative electrode current collector, the second main surface is an opposing surface of the first main surface, the negative electrode active material layer comprises a first layer and a second layer, the second layer is laminated on the first layer, the second layer comprises the second main surface, the first layer comprises a first negative electrode active material and a first conductive material, the first negative electrode active material comprises a graphite material and a silicon material, the first conductive material comprises carbon nanotube, the first conductive material is contained at 0.3 parts by mass or more to 0.7 parts by mass or less relative to 100 parts by mass of the first negative electrode active material, the second layer comprises a second negative electrode active material and a second conductive material, the second negative electrode active material comprises a graphite material, the second conductive material is contained at 0.05 parts by mass or more and 0.15 parts by mass or less relative to 100 parts by mass of the second negative electrode active material.

### CITATION LIST

### PATENT LITERATURE

PTL 1 Japanese Unexamined Patent Publication No. 2018-181539
PTL 2 Japanese Unexamined Patent Publication No. 2020-087653

### SUMMARY

### TECHNICAL PROBLEM

Lithium-ion secondary batteries comprising conventional negative electrodes have room for improvement in terms of cycle characteristics.

### SOLUTION TO PROBLEM

The present application discloses the following plurality of aspects as means for achieving the above object.

### <Aspect 1>

A negative electrode for a lithium-ion secondary battery, having the following cross-sectional configuration, wherein:
the cross-sectional configuration comprises a negative electrode current collector, a plurality of first layers, and a second layer;
each of the first layers comprises a first negative electrode active material and a first conductive material;
the first negative electrode active material comprises at least one of elemental silicon, a silicon alloy, and a silicon oxide;
the second layer comprises a second negative electrode active material;
the second negative electrode active material comprises graphite;
the second layer does not comprise silicon;
in the cross-sectional configuration, a surface of one side of the negative electrode current collector has a plurality of first regions and a second region between the first regions;
in the cross-sectional configuration, the first layers are in contact with the respective first regions; and
in the cross-sectional configuration, the second layer is in contact with both the second region and surfaces of one side of the first layers.

### <Aspect 2>

The negative electrode for a lithium-ion secondary battery according to Aspect 1, wherein a porosity of the first layers in a discharging state is 25% or greater.

### <Aspect 3>

The negative electrode for a lithium-ion secondary battery according to Aspect 1 or 2, wherein the first layers are present in an island form on the surface of one side of the negative electrode current collector.

### <Aspect 4>

The negative electrode for a lithium-ion secondary battery according to Aspect 1 or 2, wherein the first layers are present in a stripe form on the surface of one side of the negative electrode current collector.

### <Aspect 5>

The negative electrode for a lithium-ion secondary battery according to any of Aspects 1 to 4, wherein
the first layers comprise a first binder,
the second layer comprises a second binder, and
the first binder is different from the second binder.

### <Aspect 6>

The negative electrode for a lithium-ion secondary battery according to Aspect 5, wherein the first binder has an imide skeleton or comprises polyacrylic acid.

### <Aspect 7>

The negative electrode for a lithium-ion secondary battery according to any of Aspects 1 to 6, wherein
the first conductive material comprises carbon.

### <Aspect 8>

The negative electrode for a lithium-ion secondary battery according to any of Aspects 1 to 7, wherein
the negative electrode current collector comprises copper.

### <Aspect 9>

The negative electrode for a lithium-ion secondary battery according to any of Aspects 1 to 8, wherein
a ratio of the first regions to the surface of one side of the negative electrode current collector is less than 40% by area.

### <Aspect 10>

The negative electrode for a lithium-ion secondary battery according to any of Aspects 1 to 9, wherein
a ratio T₁/T₂ of a maximum thickness T₁ of the first layers to a maximum thickness T₂ of the second layer is 0.6 or less.

### <Aspect 11>

A method for manufacturing a negative electrode for a lithium-ion secondary battery, comprising the following first step, second step, and third step, wherein:
the first step comprises preparing a negative electrode current collector, wherein in a cross-sectional configuration of the negative electrode current collector, a surface of one side of the negative electrode current collector has a plurality of first regions and a second region between the first regions;
the second step comprises laminating a first layer on the first regions, wherein the first layer comprises a first negative electrode active material and a first conductive material, and the first negative electrode active material comprises at least one of elemental silicon, a silicon alloy, and a silicon oxide; and
the third step comprises laminating a second layer on the negative electrode current collector and the first layer to bring the second layer into contact with both a surface of one side of the first layer and the second region, wherein the second layer comprises a second negative electrode active material, the second negative electrode active material comprises graphite, and the second layer does not comprise silicon.

### <Aspect 12>

A lithium-ion secondary battery, comprising the negative electrode according to any of Aspects 1 to 10, a positive electrode, and an electrolyte layer.

### ADVANTAGEOUS EFFECTS OF INVENTION

According to the negative electrode for a lithium-ion secondary battery of the present disclosure, cycle characteristics of a lithium-ion secondary battery is improved.

### BRIEF DESCRIPTION OF DRAWINGS

FIG. 1A schematically shows one example of a cross-sectional configuration of a negative electrode for a lithium-ion secondary battery.
FIG. 1B schematically shows one example of a cross-sectional configuration of a negative electrode for a lithium-ion secondary battery. First layers, a second layer, and a negative electrode current collector are disassembled.
FIG. 2A schematically shows one example of arrangement of first layers on a surface of a negative electrode current collector.
FIG. 2B schematically shows one example of arrangement of first layers on a surface of a negative electrode current collector.
FIG. 2C schematically shows one example of arrangement of first layers on a surface of a negative electrode current collector.
FIG. 3 shows one example of the flow of a method for manufacturing a negative electrode for a lithium-ion secondary battery.
FIG. 4 schematically shows one example of a cross-sectional configuration of a lithium-ion secondary battery.
FIG. 5 is a photograph showing a coated body according to Example 1.

### DESCRIPTION OF EMBODIMENTS

### 1. Negative electrode for lithium-ion secondary battery

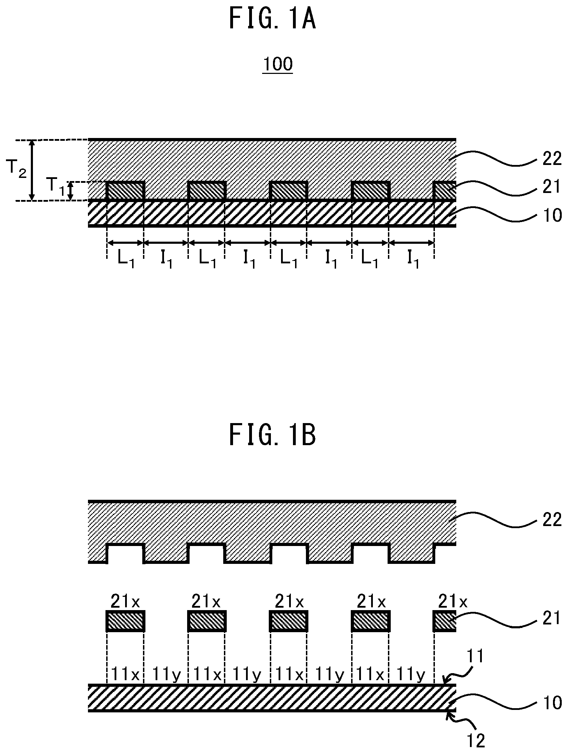

Hereinafter, the negative electrode for a lithium-ion secondary battery according to one embodiment will be described with reference to the drawings. However, the technique of the present disclosure is not limited to the following embodiment. FIGS. 1A and 1B schematically show cross-sectional configurations of the negative electrode 100 for a lithium-ion secondary battery according to one embodiment.

As shown in FIGS. 1A and 1B, the negative electrode 100 for a lithium-ion secondary battery has the following cross-sectional configuration. Specifically, the cross-sectional configuration comprises a negative electrode current collector 10, a plurality of first layers 21, and a second layer 22. Each of the first layers 21 comprises a first negative electrode active material and a first conductive material. The first negative electrode active material comprises at least one of elemental silicon, a silicon alloy, and a silicon oxide. The second layer 22 comprises a second negative electrode active material. The second negative electrode active material comprises graphite. The second layer 22 does not comprise silicon. In the cross-sectional configuration, a surface 11 of one side of the negative electrode current collector 10 has a plurality of first regions 11x and a second region 11y between the first regions 11x. In the cross-sectional configuration, the first layers 21 are in contact with the respective first regions 11x. In the cross-sectional configuration, the second layer 22 is in contact with both the second region 11y and surfaces 21x of one side of the first layers 21.

### 1.1 Negative electrode current collector

Any general negative electrode current collector for lithium-ion secondary batteries can be adopted as the negative electrode current collector 10.

### 1.1.1 Shape of negative electrode current collector

The negative electrode current collector 10 may be foil-like, plate-like, mesh-like, punched metal-like, or a foam. The negative electrode current collector 10 may be a metal foil or a metal mesh, and alternatively may be a carbon sheet. Particularly, when the negative electrode current collector 10 is a metal foil, the negative electrode current collector 10 has excellent handleability, and a first layer 21 and a second layer 22, which will be described below, can be easily laminated on a surface 11 of one side of the negative electrode current collector 10. The negative electrode current collector 10 may have a plurality of foils or sheets. The negative electrode current collector 10 may have on the surface thereof some coating layer for the purpose of adjusting resistance. For example, the negative electrode current collector 10 may have a carbon coating layer. The negative electrode current collector 10 may be a metal foil having a carbon coating layer. The negative electrode current collector 10 may also be a metal foil or a substrate plated or vapor-deposited with a metal described below. When the negative electrode current collector 10 has a plurality of metal foils, there may be some layer between the plurality of metal foils. The thickness of the negative electrode current collector 10 is not particularly limited and for example, may be 0.1 µm or more or 1 µm or more, and may be 1 mm or less or 100 µm or less.

### 1.1.2 Specific example of metal constituting negative electrode current collector

Examples of a metal constituting the negative electrode current collector 10 include at least one selected from copper (Cu), nickel (Ni), chromium (Cr), gold (Au), platinum (Pt), silver (Ag), aluminum (Al), iron (Fe), titanium (Ti), zinc (Zn), cobalt (Co), vanadium (V), magnesium (Mg), lead (Pb), germanium (Ge), indium (In), tin (Sn), zirconium (Zr), and stainless steel. Particularly, from the viewpoint of ensuring reduction resistance and the viewpoint of making alloying with lithium difficult, the negative electrode current collector 10 may comprise at least one metal selected from copper, nickel, and stainless steel. Particularly, when the negative electrode current collector 10 comprises copper, even more excellent performance is easily ensured.

### 1.1.3 Surface of one side of negative electrode current collector

As shown in FIGS. 1A and 1B, in the cross-sectional configuration of the negative electrode 100, the surface 11 of one side of the negative electrode current collector 10 has a plurality of first regions 11x and a second region 11y between the first regions 11x. First layers 21 and a second layer 22 described below are laminated on the surface 11 of one side of the negative electrode current collector 10.

As shown in FIGS. 1A and 1B, in the cross-sectional configuration of the negative electrode 100, each of the plurality of first regions 11x may have a length L₁ along the surface 11 of one side of the negative electrode current collector 10. The length L₁ is not particularly limited and can be appropriately determined according to target battery performance. In one embodiment, the length L₁ may be 10 µm or more and 0.5 mm or less. One length L₁ may be the same as or different from another length L₁.

As shown in FIGS. 1A and 1B, in the cross-sectional configuration of the negative electrode 100, an interval I₁ can be present between a plurality of first regions 11x. The interval I₁ is not particularly limited and can be appropriately determined according to target battery performance. In one embodiment, the interval I₁ may be 1 µm or more and 0.5 mm or less. One interval I₁ may be the same as or different from another interval I₁.

A ratio L₁/I₁ of the length L₁ to the interval I₁ described above is not particularly limited and can be appropriately determined according to target battery performance. In one embodiment, the ratio L₁/I₁ of the length L₁ to the interval I₁ may be 0.5 or greater and 3 or less.

A ratio of the first regions 11x to the surface 11 of one side of the negative electrode current collector 10 is not particularly limited and can be appropriately determined according to target battery performance. Particularly, when the ratio of the first regions 11x to the surface 11 of one side of the negative electrode current collector 10 is less than 40% by area, more excellent performance is easily exhibited. The ratio may be 20% by area or greater and less than 40% by area, or 25% by area or greater and 38% by area or less.

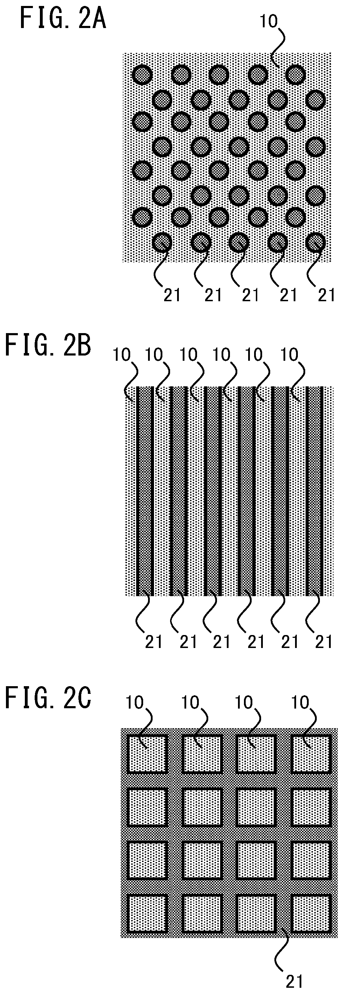

FIGS. 2A, 2B, and 2C schematically show examples of arrangement of the first layers 21 when only the first layers 21 are laminated on the surface 11 of one side of the negative electrode current collector 10. As shown in FIGS. 2A, 2B, and 2C, in a state where only the first layers 21 are laminated on the surface 11 of one side of the negative electrode current collector 10, a portion of the surface 11 of one side of the negative electrode current collector 10 is exposed. In this case, of the surface 11 of one side of the negative electrode current collector 10, the portions on which the first layers 21 are laminated can correspond to the first regions 11x described above, and the exposed portion without the first layers 21 laminated thereon can correspond to the second region 11y described above.

The surface 11 of one side of the negative electrode current collector 10, in addition to the first regions 11x and the second region 11y described above, may have a third region (not illustrated). The third region, for example, may be a region not in contact with any of the first layers 21 and the second layer 22.

### 1.1.4 Surface of other side of negative electrode current collector

The form of a surface 12 of the other side of the negative electrode current collector 10 is not particularly limited. The surface 12 of the other side of the negative electrode current collector 10 may have a first layer 21 and a second layer 22 laminated thereon. Alternatively, a layer different from the first layer 21 and the second layer 22 may be laminated thereon. Alternatively, the surface may be exposed without any layer laminated thereon.

### 1.2 First layer

As shown in FIGS. 1A and 1B, the cross-sectional configuration of the negative electrode 100 comprises a plurality of first layers 21. Each of the first layers 21 comprises a first negative electrode active material and a first conductive material. The first negative electrode active material comprises at least one of elemental silicon, a silicon alloy, and a silicon oxide. In the cross-sectional configuration, the first layers 21 are in contact with the respective first regions 11x described above. In other words, in the cross-sectional configuration of the negative electrode 100, the plurality of first layers 21 are arranged on the surface 11 of one side of the negative electrode current collector 10 at intervals along a plane direction of the surface 11.

### 1.2.1 Negative electrode active material that can be contained in first layers

The first layers 21 comprise a first negative electrode active material. The first negative electrode active material comprises at least one (silicon-based negative electrode active material) of elemental silicon, a silicon alloy, and a silicon oxide. Particularly, when the first layers 21 comprise a silicon oxide, particularly silicon monoxide, as the first negative electrode active material, excellent performance is easily obtained. In the first layers 21, one type of the first negative electrode active material may be used alone, or two or more types may be used in combination.

The first layers 21 may comprise another active material in addition to the above silicon-based negative electrode active material. For example, the first layers 21 may comprise at least one selected from carbon-based active materials such as graphite and hard carbon; various oxide-based active material such as lithium titanate; and metallic lithium and lithium alloys. The ratio of silicon-based active material to the negative electrode active material contained in the first layers 21 is not particularly limited, but the higher the ratio of the silicon-based active material, the more excellent performance is easily exhibited. For example, when the entire amount of the negative electrode active material contained in the first layers 21 is 100% by mass, the silicon-based active material may be 50% by mass or greater and 100% by mass or less, 60% by mass or greater and 100% by mass or less, 70% by mass or greater and 100% by mass or less, 80% by mass or greater and 100% by mass or less, 90% by mass or greater and 100% by mass or less, or 95% by mass or greater and 100% by mass or less.

The negative electrode active material contained in the first layers 21 may have any shape as long as it is a general shape of negative electrode active materials of lithium-ion secondary batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 µm or less, 100 µm or less, 50 µm or less, or 30 µm or less. Note that the average particle diameter D50 referred herein is a particle diameter (median diameter) at an integrated value of 50% in a volume-based particle size distribution determined by a laser diffraction/scattering method. The negative electrode active material particles contained in the first layers 21 may be larger or smaller than the negative electrode active material particles contained in the second layer 22 described below, or may be the same size as the negative electrode active material particles contained in the second layer 22 described below. In one embodiment, the negative electrode active material particles contained in the first layers 21 may be smaller than the negative electrode active material particles contained in the second layer 22 described below.

The amount of the negative electrode active material contained in the first layers 21 is not particularly limited. For example, the amount of the negative electrode active material contained in the first layers 21, when the entirety of the first layers 21 is 100% by mass, may be 50% by mass or greater and less than 100% by mass, 60% by mass or greater and 99% by mass or less, 70% by mass or greater and 98% by mass or less, or 80% by mass or greater and 97% by mass or less.

### 1.2.2 Conductive material that can be contained in first layers

The first layers 21 comprise a first conductive material. When the first layers 21 do not comprise a first conductive material, cycle characteristics of a lithium-ion secondary battery deteriorate. The first conductive material may be, for example, at least one selected from carbon materials such as vapor-grown carbon fibers (VGCFs), acetylene black (AB), ketjen black (KB), carbon nanotubes (CNTs), and carbon nanofibers (CNFs); and metal materials such as nickel, titanium, aluminum, and stainless steel. Particularly, when the first conductive material comprises carbon, more excellent performance is easily exhibited. The first conductive material may be, for example, particulate or fibrous, and the size thereof is not particularly limited. One type of the first conductive material may be used alone, or two or more types may be used in combination.

The amount of the first conductive material contained in the first layers 21 is not particularly limited. For example, the amount of the first conductive material contained in the first layers 21, when the entirety of the first layers 21 is 100% by mass, may be greater than 0% by mass and 50% by mass or less, 1% by mass or greater and 40% by mass or less, 1% by mass or greater and 30% by mass or less, 1% by mass or greater and 20% by mass or less, or 1% by mass or greater and 10% by mass or less.

### 1.2.3 Binder that can be contained in first layer

The first layers 21 may comprise a first binder. The first binder may be the same as or different from a second binder described below. Particularly, when the first layers 21 comprise the first binder, the second layer 22 comprises the second binder, and the first binder is different from the second binder, more excellent performance is easily exhibited. The first binder may be, for example, at least one selected from butadiene rubber (BR)-based binders, butylene rubber (IIR)-based binders, acrylate-butadiene rubber (ABR)-based binders, styrene-butadiene rubber (SBR)-based binders, carboxymethylcellulose (CMC)-based binders, polyvinylidene fluoride (PVdF)-based binders, polytetrafluoroethylene (PTFE)-based binders, polyimide (PI)-based binders, and polyacrylic acid (PAA)-based binders. Particularly, when the first binder has an imide skeleton (i.e., is a polyimide (PI)-based binder) or comprises polyacrylic acid (i.e., is a polyacrylic acid (PAA)-based binder), the first layers 21 are stronger, the volume changes of the first layers 21 during charging and discharging are even smaller, and cycle characteristics of the lithium-ion secondary battery are more easily improved. One type of the first binder may be used alone, or two or more types may be used in combination.

The amount of the first binder contained in the first layers 21 is not particularly limited. For example, the amount of the first binder contained in the first layers 21, when the entirety of the first layers 21 is 100% by mass, may be 0% by mass or greater and less than 50% by mass, greater than 0% by mass and 40% by mass or less, 1% by mass or greater and 30% by mass or less, 1% by mass or greater and 20% by mass or less, or 1% by mass or greater and 15% by mass or less.

### 1.2.4 Additional components that can be contained in first layers

The first layers 21 may comprise, for example, various additives such as a thickener, in addition to the above components. When a solid electrolyte is adopted as the electrolyte of a lithium-ion secondary battery, the first layers 21 may comprise a solid electrolyte. The solid electrolyte may be inserted inside the first layers 21 after the binder constituting the layers is cured. In this case, the method as described in, for example, Japanese Registered Patent Publication No. 6834921 can be adopted.

### 1.2.5 Cross-sectional shape of first layers

As shown in FIG. 1A, in the cross-sectional configuration of the negative electrode 100, the first layers 21 each may have a length L₁ along the surface of the negative electrode current collector 10. The length L₁ is not particularly limited and can be appropriately determined according to target battery performance. In one embodiment, the length L₁ may be 10 µm or more and 0.5 mm or less. The length L₁ of one first layer 21 may be the same as or different from the length L₁ of another first layer 21.

As shown in FIG. 1A, in the cross-sectional configuration of the negative electrode 100, the first layers 21 can have a thickness in an intersecting direction to the surface of the negative electrode current collector 10. The maximum thickness T₁ of the first layers 21 is not particularly limited and can be appropriately determined according to target battery performance. In one embodiment, the maximum T₁ may be 1 µm or more and less than 1 mm. The maximum thickness T₁ of one first layer 21 may be the same as or different from the maximum thickness T₁ of another first layer 21.

A ratio L₁/T₁ of the length L₁ to the maximum thickness T₁ described above is not particularly limited and can be appropriately determined according to target battery performance. In one embodiment, the ratio L₁/T₁ of the length L₁ to the maximum thickness T₁ may be 0.5 or greater and 3.0 or less.

### 1.2.6 Overall shape of first layers

The first layers 21 may be arranged regularly on the surface 11 of one side of the negative electrode current collector 10. FIGS. 2A, 2B, and 2C schematically show examples of arrangement of the first layers 21 when only the first layers 21 are laminated on the surface 11 of one side of the negative electrode current collector 10. As shown in FIG. 2A, the first layers 21 may be present in an island form on the surface 11 of one side of the negative electrode current collector 10. Alternatively, as shown in FIG. 2B, the first layers 21 may be present in a stripe form on the surface 11 of one side of the negative electrode current collector 10. Alternatively, as shown in FIG. 2C, the first layers 21 may be present in a lattice form on the surface 11 of one side of the negative electrode current collector 10. Alternatively, the first layers 21 may be arranged regularly in a form other than those above or may be arranged irregularly on the surface 11 of one side of the negative electrode current collector 10.

The first layers 21 in a discharging state may have voids. By having voids in the first layers 21, even when the first negative electrode active material expands during charging of the lithium-ion secondary battery, the expansion amount of the first layers 21 as a whole is likely small. A "discharging state" refers to a state in which lithium is not stored. The porosity of the first layers 21 in a discharging state may be 25% or greater, 30% or greater, or 32% or greater. The porosity of the first layers 21 may be 25% or greater and 50% or less, 30% or greater and 45% or less, or 32% or greater and 40% or less. The porosity of the first layers 21 can be easily determined by observing a cross-section of the first layers 21 using an optical microscope or SEM and measuring the ratio of voids in the cross-section.

### 1.3 Second layer

As shown in FIG. 1A, the cross-sectional configuration of the negative electrode 100 comprises a second layer 22. The second layer 22 comprises a second negative electrode active material. The second negative electrode active material comprises graphite. However, the second layer 22 does not comprise silicon. In the cross-sectional configuration, the second layer 22 is in contact with both a second region 11y and surfaces 21x of one side of the first layers 21. In other words, in the cross-sectional configuration of the negative electrode 100, the second layer 22 is laminated over both the second region 11y and the surfaces 21x of one side of the first layers 21.

### 1.3.1 Negative electrode active material that can be contained in second layer

The second layer 22 comprises a second negative electrode active material. The second negative electrode active material comprises graphite. However, the second layer 22 does not comprise silicon. Specifically, the second layer 22 does not comprise any of elemental silicon, a silicon alloy, and a silicon oxide. Note that, "the second layer does not comprise silicon" means that the second layer 22 is substantially free of silicon. In other words, the second layer 22 may comprise silicon at an impurity level. Specifically, the amount of silicon contained in the second layer 22 is less than 0.1% by mass. The second layer 22 may comprise graphite and an active material other than silicon as the negative electrode active material. For example, the second layer 22 may comprise at least one selected from various oxide-based active materials such as lithium titanate, metallic lithium, and lithium alloys (excluding silicon alloys). The ratio of graphite in the negative electrode active material contained in the second layer 22 is not particularly limited, but the higher the ratio of graphite, the more excellent performance is easily exhibited. For example, when the entire amount of the negative electrode active material contained in the second layer 22 is 100% by mass, graphite may be 50% by mass or greater and 100% by mass or less, 60% by mass or greater and 100% by mass or less, 70% by mass or greater and 100% by mass or less, 80% by mass or greater and 100% by mass or less, 90% by mass or greater and 100% by mass or less, or 95% by mass or greater and 100% by mass or less.

The negative electrode active material contained in the second layer 22 may have any shape as long as it is a general shape of negative electrode active materials of lithium-ion secondary batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 µm or less, 100 µm or less, 50 µm or less, or 30 µm or less. The negative electrode active material particles contained in the second layer 22 may be larger or smaller than the negative electrode active material particles contained in the first layers 21 described above, or may be the same size as the negative electrode active material particles contained in the first layers 21 described above.

The amount of the negative electrode active material contained in the second layer 22 is not particularly limited. For example, the amount of the negative electrode active material contained in the second layer 22, when the entirety of the second layer 22 is 100% by mass, may be 50% by mass or greater and 100% by mass or less, 60% by mass or greater and 100% by mass or less, 70% by mass or greater and 100% by mass or less, 80% by mass or greater and 100% by mass or less, or 90% by mass or greater and 100% by mass or less.

### 1.3.2 Conductive material that can be contained in second layer

The second layer 22 may comprise a second conductive material. The second conductive material may be, for example, at least one selected from carbon materials such as vapor-grown carbon fibers (VGCFs), acetylene black (AB), ketjen black (KB), carbon nanotubes (CNTs), and carbon nanofibers (CNFs); and metal materials such as nickel, titanium, aluminum, and stainless steel. The second conductive material may be, for example, particulate or fibrous, and the size thereof is not particularly limited. One type of the second conductive material may be used alone, or two or more types may be used in combination.

The amount of the second conductive material contained in the second layer 22 is not particularly limited. The second layer 22, as described above, comprises graphite and thereby has high conductivity. In this regard, the second layer 22 may not comprise a second conductive material. The amount of the second conductive material contained in the second layer 22, when the entirety of the second layer 22 is 100% by mass, may be 0% by mass or greater and 50% by mass or less, 0% by mass or greater and 40% by mass or less, 0% by mass or greater and 30% by mass or less, 0% by mass or greater and 20% by mass or less, 0% by mass or greater and 10% by mass or less, 0% by mass or greater and 5% by mass or less, or 0% by mass or greater and 1% by mass or less.

### 1.3.3 Binder that can be contained in second layer

The second layer 22 may comprise a second binder. The second binder may be the same as or different from the first binder described above. Particularly, when the first binder is different from the second binder, more excellent performance is easily exhibited. The second binder may be, for example, at least one selected from butadiene rubber (BR)-based binders, butylene rubber (IIR)-based binders, acrylate-butadiene rubber (ABR)-based binders, styrene-butadiene rubber (SBR)-based binders, carboxymethylcellulose (CMC)-based binders, polyvinylidene fluoride (PVdF)-based binders, polytetrafluoroethylene (PTFE)-based binders, polyimide (PI)-based binders, and polyacrylic acid (PAA)-based binders. Particularly, when the second binder is a binder other than a polyimide (PI)-based binder or a polyacrylic acid (PAA)-based binder, irreversible capacity is smaller, resistance is smaller, and more excellent performance is easily exhibited. For example, when the second binder is at least one rubber-based binder selected from butadiene rubber (BR)-based binders, butylene rubber (IIR)-based binders, acetylene-butadiene rubber (ABR)-based binders, and styrene-butadiene rubber (SBR)-based binders, more excellent performance is easily exhibited. One type of the second binder may be used alone, or two or more types may be used in combination.

The amount of the second binder contained in the second layer 22 is not particularly limited. For example, the amount of the second binder contained in the second layer 22, when the entirety of the second layer 22 is 100% by mass, may be 0% by mass or greater and 50% by mass or less, 0% by mass or greater and 40% by mass or less, 0% by mass or greater and 30% by mass or less, 0% by mass or greater and 20% by mass or less, or 0% by mass or greater and 10% by mass or less.

### 1.3.4 Additional components that can be contained in second layer

The second layer 22 may comprise, for example, various additives such as a thickener, in addition to the above components. When a solid electrolyte is adopted as the electrolyte of a lithium-ion secondary battery, the second layer 22 may comprise a solid electrolyte. The solid electrolyte may be mixed with graphite when the second layer 22 is formed.

### 1.3.5 Cross-sectional shape of second layer

As shown in FIG. 1A, in the cross-sectional configuration of the negative electrode 100, the second layer 22 may have a thickness in an intersecting direction to the surface of the negative electrode current collector 10. The "thickness of the second layer" is a thickness from the surface in contact with the negative electrode current collector 10 to a surface on an opposite side. The maximum thickness T₂ of the second layer 22 is not particularly limited and can be appropriately determined according to target battery performance. In one embodiment, the maximum thickness T₂ may be more than 1 µm and 1 mm or less.

As shown in FIG. 1A, in the cross-sectional configuration of the negative electrode 100, the maximum thickness T₂ of the second layer 22 is larger than the maximum thickness T₁ of the first layers 21. Particularly, when the ratio T₁/T₂ of the maximum thickness T₁ of the first layers 21 to the maximum thickness T₂ of the second layer 22 is 0.6 or less, the second layer 22 having a sufficient thickness is laminated on the surfaces 21x of one side of the first layers 21, peeling of the second layer 22 does not easily occur, and more excellent performance is easily exhibited. The ratio T₁/T₂ may be 0.1 or greater and 0.6 or less, or 0.2 or greater and 0.5 or less.

### 1.3.6 Overall shape of second layer

As shown in FIGS. 1A and 1B, the second layer 22 has unevenness on the side facing the negative electrode current collector 10. Specifically, the portions in contact with the surfaces 21x of one side of the first layers 21 can be recessed portions, and the portions in contact with the second region 11y of the surface 11 of one side of the negative electrode current collector 10 can be protruding portions. However, the shape of the opposite side to the side facing the negative electrode current collector 10 is not particularly limited. The second layer 22 may or may not have unevenness on the opposite side to the side facing the negative electrode current collector 10.

The second layer 22 in a discharging state may have voids. The porosity of the second layer 22 in a discharging state may be 0% or greater or 20% or less, 1% or greater and 20% or less, 5% or greater and 20% or less, or 10% or greater and 20% or less. The porosity of the second layer 22 may be less than the porosity of the first layers.

### 1.4 Additional features

The negative electrode 100, in addition to the above features, may comprise general features for a negative electrode for lithium-ion secondary batteries, for example, tabs and terminals.

### 1.5 Function/Effect

In a silicon-based active material during charging (when alloying with lithium), the volume expands greatly, ion conduction paths and electron conduction paths with the active material are cut, and cycle characteristics easily deteriorate. To mitigate this effect, a polyimide (PI)-based binder or a polyacrylic acid (PAA)-based binder, which has higher strength than binders generally used for graphite negative electrodes, can be used with the silicon-based active material. In addition, a conductive material such as ketjen black or acetylene black can be used with the silicon-based active material. As another mitigation method, in addition to the silicon-based active material, graphite fine particles having a small expansion coefficient can be mixed to form a composite. However, in order to obtain satisfactory cycle characteristics, a strong binder or conductive material is required near the silicon-based active material, and as a result, a strong binder or conductive material, which is originally not required, is present near the graphite. A portion of the strong binder or conductive material may react with lithium to generate irreversible capacity and decrease capacity. Further, the volume of the binder or conductive material itself may be a factor in decreasing capacity. Furthermore, adding an unnecessarily large amount of binder may inhibit the reaction between the active material and lithium, leading to an increase in resistance. To solve these issues, PTL 1 (Japanese Unexamined Patent Publication No. 2018-181539) describes that a negative electrode is separated into two layers, a layer mainly composed of a silicon-based active material and a layer mainly composed of graphite, and these layers are laminated planarly. By separating the layer mainly composed of a silicon-based active material and the layer mainly composed of graphite into two layers, it is possible, for example, to arrange a strong binder or conductive material only around the silicon-based active material, and the freedom in design is increased. However, in such a configuration, when the silicon-based active material expands, the entire layer mainly composed of the silicon-based active material expands as a whole. According to the findings of the present inventors, in a layer mainly composed of a silicon-based active material, the silicon-based active materials adjacent to each other in the plane direction exert a reaction force on each other due to expansion, and expansion in the horizontal direction parallel to the negative electrode current collector is difficult. Thus, expansion stress of the layer mainly composed of a silicon-based active material is likely to concentrate on the layer mainly composed of graphite. In other words, when the silicon-based active material expands due to charging, the layer mainly composed of graphite is likely to collapse and stress is likely to occur in the layer mainly composed of graphite. As a result, cracking and peeling occur and cycle characteristics deteriorate in the layer mainly composed of graphite, despite the small expansion amount thereof.

In contrast, in the negative electrode 100 for a lithium-ion secondary battery of the present disclosure, as shown in FIGS. 1A and 1B, a second region 11y is present between a plurality of first regions 11x on the surface 11 of one side of the negative electrode current collector 10, and an interval I₁ is present between one first layer 21 and another first layer 21 in the plane direction of negative electrode current collector 10. Thus, when the silicon-based active material within the first layers 21 expands due to charging, the first layers 21 can expand not only in the thickness direction (normal direction) thereof but also in a direction along the plane of the current collector 10 (lateral direction). Specifically, the expansion of the first layers 21 is distributed in the normal direction and the lateral direction, stress concentrations near the contact portions between the first layers 21 and the second layer 22 are suppressed, and shape collapse and cracking in the second layer 22 do not easily occur. In other words, the ion conduction paths and conductive paths in the first layers 21 and the second layer 22 are easily maintained. Further, in the negative electrode 100 for a lithium-ion secondary battery of the present disclosure, a portion of the second layer 22 comprising graphite having small expansion and contraction is in direct contact with the negative electrode current collector 10, and consequently paths do not easily break. As a result, when the negative electrode 100 of the present disclosure is applied to a lithium-ion secondary battery, cycle characteristics of the lithium-ion secondary battery can be improved.

### 2. Method for manufacturing negative electrode for a lithium-ion secondary battery

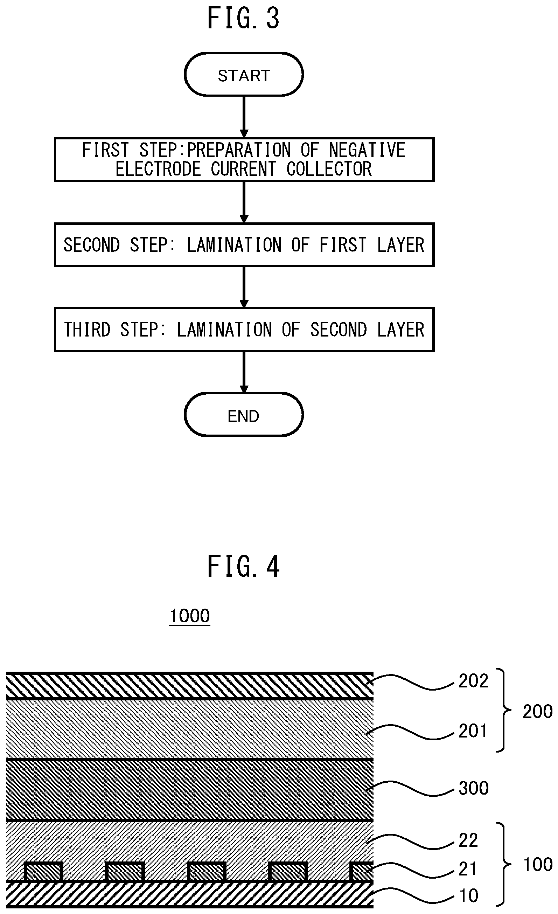

The negative electrode for a lithium-ion secondary battery of the present disclosure can be manufactured by, for example, the following method. FIG. 3 shows the flow of the method for manufacturing a negative electrode 100 for a lithium-ion secondary battery according to one embodiment. As shown in FIG. 3, the method for manufacturing a negative electrode 100 for a lithium-ion secondary battery comprises the following first step, second step, and third step. The first step comprises preparing a negative electrode current collector 10, wherein in the cross-sectional configuration of the negative electrode current collector 10, a surface 11 of one side of the negative electrode current collector 10 has a plurality of first regions 11x and a second region 11y between the first regions 11x. The second step comprises laminating a first layer 21 on the first regions 11x, wherein the first layer 21 comprises a first negative electrode active material and a first conductive material, and the first negative electrode active material comprises at least one of elemental silicon, a silicon alloy, and a silicon oxide. The third step comprises laminating a second layer 22 on the negative electrode current collector 10 and the first layer 21 to bring the second layer 22 into contact with both a surface 21x of one side of the first layer 21 and the second region 11y, wherein the second layer 22 comprises a second negative electrode active material, the second negative electrode active material comprises graphite, and the second layer 22 does not comprise silicon.

### 2.1 First step

In the first step, a negative electrode current collector 10 is prepared. The configuration of the negative electrode current collector 10 is as described above.

### 2.2 Second step

In the second step, a first layer 21 is laminated on first regions 11x on a surface 11 of one side of the negative electrode current collector 10. The configuration of the first layer 21 is as described above.

The method of laminating the first layer 21 is not particularly limited. For example, the first layer 21 can be laminated on the first regions 11x of the surface 11 of one side of the negative electrode current collector 10 by preparing a paste comprising materials constituting the first layer 21, applying the paste to the first regions 11x of the surface 11 of one side of the negative electrode current collector 10, and then drying the paste. When applying the paste, it is preferable that a portion of the surface 11 (second region 11y) of one side of the negative electrode current collector 10 be masked so that the paste is not applied to regions other than the first regions 11x of the surface 11 of one side of the negative electrode current collector 10. The solvent constituting the paste is not particularly limited, and water and various organic solvents can be adopted. The means of applying the paste is not particularly limited, and a doctor blade may be used, or spraying may be used. Alternatively, various printing means such as inkjet printing may be used.

When a thermosetting binder such as a polyimide (PI)-based binder is adopted in the first layer 21, the first layer 21 can be formed, for example, as follows. Specifically, a paste comprising a silicon-based active material constituting the first layer 21 and polyamic acid is prepared, the paste is applied to the first regions 11x of the surface 11 of one side of the negative electrode current collector 10 and then heated to imidize the polyamic acid, whereby a first layer 21 comprising a silicon-based active material and a polyimide-based binder can be formed on the first regions 11x.

### 2.3 Third step

In the third step, a second layer 22 is laminated on the negative electrode current collector 10 and the first layer 21, and the second layer 22 is brought into contact with both a surface 21x of one side of the first layer 21 and the second region 11y. The configuration of the second layer 22 is as described above.

The method of laminating the second layer 22 is not particularly limited. For example, the second layer 22 can be brought into contact with both the surface 21x of one side of the first layer 21 and the second region 11y by preparing a paste comprising materials constituting the second layer 22, applying the paste over both the surface 21x of one side of the first layer 21 and the second region 11y of the surface 11 of one side of the negative electrode current collector 10, and then drying the paste. The solvent constituting the paste is not particularly limited, and water and various organic solvents can be adopted. The means of applying the paste is not particularly limited, and a doctor blade may be used, or spraying may be used. Alternatively, various printing means such as inkjet printing may be used. The method of forming the second layer 22 may be the same as or different from the method of forming the first layer 21.

### 2.4 Additional steps

The method for manufacturing a negative electrode 100 for a lithium-ion secondary battery may comprise additional steps, in addition to the above first step, second step, and third step. For example, each layer described above may be pressed. Tabs and terminals may be attached.

### 3. Lithium-ion secondary battery

The technique of the present disclosure also includes an aspect as a lithium-ion secondary battery. FIG. 4 schematically shows a cross-sectional configuration of the lithium-ion secondary battery 1000 according to one embodiment. As shown in FIG. 4, the lithium-ion secondary battery 1000 comprises the above negative electrode 100 of the present disclosure, a positive electrode 200, and an electrolyte layer 300.

### 3.1 Negative electrode

The configuration of the negative electrode 100 is as described above.

### 3.2 Positive electrode

The positive electrode 200 may comprise, for example, a positive electrode active material layer 201 and a positive electrode current collector 202 in contact with the positive electrode active material layer 201.

### 3.2.1 Positive electrode active material layer

The positive electrode active material layer 201 comprises at least a positive electrode active material. In addition, the positive electrode active material layer 201 may optionally comprise an electrolyte, a conductive material, a binder, and various additives. The content of each component in the positive electrode active material layer 201 may be appropriately determined according to target battery performance. For example, when the entire solid content of the positive electrode active material layer 201 is 100% by mass, the content of the positive electrode active material may be 40% by mass or greater, 50% by mass or greater, 60% by mass or greater, or 70% by mass or greater and may be 100% by mass or less, less than 100% by mass, 95% by mass or less, or 90% by mass or less. The shape of the positive electrode active material layer 201 is not particularly limited, and may be a sheet having a substantially flat surface. The thickness of the positive electrode active material layer 201 is not particularly limited, and for example, may be 0.1 µm or more, 1 µm or more, 10 µm or more, or 30 µm or more and may be 2 mm or less, 1 mm or less, 500 µm or less, or 100 µm or less.

Any known positive electrode active material for lithium-ion secondary batteries can be adopted as the positive electrode active material contained in the positive electrode active material layer 201. Of known active materials, a material having a relatively high potential (charge/discharge potential) for storing and releasing lithium ions can be used as a positive electrode active material, and a material having a relatively low potential can be used as the negative electrode active material described above. The positive electrode active material may be, for example, at least one selected from various lithium-containing compounds, elemental sulfur, and sulfur compounds. The lithium-containing compound as a positive electrode active material may be a lithium-containing oxide comprising at least one element M, Li, and O. The element M may be, for example, at least one selected from Mn, Ni, Co, Al, Mg, Ca, Sc, V, Cr, Cu, Zn, Ga, Ge, Y, Zr, Sn, Sb, W, Pb, Bi, Fe, and Ti, and may be at least one selected from the group consisting of Mn, Ni, Co, Al, Fe, and Ti. More specifically, the lithium-containing oxide may be at least one selected from lithium cobaltate, lithium nickelate, lithium manganate, lithium nickel-cobalt oxide, lithium nickel-manganese oxide, lithium cobalt-manganese oxide, lithium nickel-cobalt-manganese oxide (Li_{1±a}NiₓCo_{y}Mn_{z}O_{2±δ} (for example, 0 < x < 1, 0 < y < 1, 0 < z < 1, x + y + z = 1)), spinel-based lithium compounds (such as heteroelement-substituted Li-Mn spinels of compositions represented by Li₁₊ₓMn_{2-x-y}M_{y}O₄ (M is one or more selected from Al, Mg, Co, Fe, Ni, and Zn)), lithium nickel-cobalt-aluminum oxide (for example, Li_{1±a}NiₚCo_{q}AlᵣO_{2±δ} (for example, p + q + r = 1)), lithium titanate, and lithium metal phosphate (such as LiMPO₄, where M is one or more selected from Fe, Mn, Co, and Ni). Particularly, when the positive electrode active material comprises at least a lithium-containing oxide comprising at least one of Ni, Co, and Mn, Li, and O as constituent elements, the performance of a secondary battery is easily further enhanced. Alternatively, when the positive electrode active material comprises at least a lithium-containing oxide comprising at least one of Ni, Co, and Al, Li, and O as constituent elements, the performance of a secondary battery is easily further enhanced. One type of the positive electrode active material may be used alone, or two or more types may be used in combination. The positive electrode active material may have any shape as long as it is a general shape of positive electrode active materials of secondary batteries, and, for example, may be particulate. The positive electrode active material may have voids, for example, may be porous, or may be hollow. The positive electrode active material may be primary particles, or may be secondary particles of agglomerated primary particles. The average particle diameter D50 of the positive electrode active material, for example, may be 1 nm or more, 5 nm or more, or 10 nm or more, and may be 500 µm or less, 100 µm or less, 50 µm or less, or 30 µm or less. Note that the average particle diameter D50 referred herein is a particle diameter (median diameter) at an integrated value of 50% in a volume-based particle size distribution determined by a laser diffraction/scattering method.

A protective layer having ion-conducting properties may be formed on the surface of the positive electrode active material. Specifically, the positive electrode active material layer 201 may comprise a composite of a positive electrode active material and a protective layer, and at least a portion of the surface of the positive electrode active material of the composite may be covered by the protective layer. As a result, for example, a reaction between the positive electrode active material and another battery material (such as a sulfide solid electrolyte described below) is easily suppressed. The protective layer having ion-conducting properties can comprise various ion-conducting compounds. The ion-conducting compound may be, for example, at least one selected from ion-conducting oxides and ion-conducting halides. The ion-conducting oxide may comprise, for example, at least one element selected from B, C, Al, Si, P, S, Ti, La, Zr, Nb, Mo, Zn, and W, Li, and O. The ion-conducting oxide may be an oxynitride comprising N. More specifically, the ion-conducting oxide may be at least one selected from Li₃BO₃, LiBO₂, Li₂CO₃, LiAlO₂, Li₄SiO₄, Li₂SiO₃, Li₃PO₄, Li₂SO₄, Li₂TiO₃, Li₄TisOi₂, Li₂Ti₂O₅, Li₂ZrO₃, LiNbO₃, Li₂MoO₄, Li₂WO₄, LiPON, Li₂O-LaO₂, and Li₂O-ZnO₂. The ion-conducting oxide may have a portion of elements substituted by various doping elements. The ion-conducting halide may be, for example, at least one of various compounds exemplified as halide solid electrolytes described below. The halide having ion-conducting properties may comprise, for example, at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm, at least one halogen element selected from the group consisting of Cl, Br, I, and F, and Li. The halide having ion-conducting properties may comprise at least one selected from the group consisting of Ti, Al, Gd, Ca, Zr, and Y, at least one selected from the group consisting of Cl, Br, I, and F, and Li. Further, the halide having ion-conducting properties may comprise at least one selected from the group consisting of Ti and Al, at least one selected from the group consisting of Cl, Br, I, and F, and Li. Furthermore, the halide having ion-conducting properties may be a composite halide of, for example, Li, Ti, Al, and F. The coverage (area ratio) of the protective layer relative to the surface of the positive electrode active material, for example, may be 70% or greater, 80% or greater, or 90% or greater. The thickness of the protective layer, for example, may be 0.1 nm or more or 1 nm or more, and may be 100 nm or less or 20 nm or less.

The electrolyte that can be contained in the positive electrode active material layer 201 may be a liquid electrolyte (electrolytic solution), may be a solid electrolyte, or may be a combination thereof. The liquid electrolyte (electrolytic solution) is a liquid comprising lithium ions as carrier ions. The electrolytic solution may be an aqueous electrolytic solution or a nonaqueous electrolytic solution. The composition of the electrolytic solution may be the same as one known as a composition of an electrolytic solution for lithium-ion secondary batteries. The electrolytic solution may be water or a nonaqueous solvent dissolving a lithium salt. Examples of the nonaqueous solvent include various carbonate-based solvents. Examples of the lithium salt include LiPF₆ and lithium amide salts. The solid electrolyte may be an inorganic solid electrolyte or an organic polymer electrolyte. Particularly, an inorganic solid electrolyte has excellent ion-conducting properties and heat resistance. Examples of the inorganic solid electrolyte include oxide solid electrolytes, sulfide solid electrolytes, and solid electrolytes having ion-bonding properties. Among inorganic solid electrolytes, sulfide solid electrolytes, particularly sulfide solid electrolytes comprising at least Li, S, and P as constituent elements, have high performance. Alternatively, among inorganic solid electrolytes, solid electrolytes having ion-bonding properties, particularly solid electrolytes comprising at least Li, Y, and a halogen (at least one of Cl, Br, I, and F) as constituent elements, have high performance. The solid electrolyte may be amorphous or crystalline. The solid electrolyte may be particulate. The average particle diameter (D50) of the solid electrolyte, for example, may be 10 nm or more and 10 µm or less. The ionic conductivity at 25 °C of the solid electrolyte, for example, may be 1 × 10⁻⁵ S/cm or more, 1 × 10⁻⁴ S/cm or more, or 1 × 10⁻³ S/cm or more. In the positive electrode active material layer 201, one type of electrolyte may be used alone, or two or more types may be used in combination.

The conductive material and the binder that can be contained in the positive electrode active material layer 201 may be appropriately selected from among conductive materials and binders exemplified as ones that can be contained in the first layers 21 and the second layer 22 of the negative electrode 100 above. The positive electrode active material layer 201 may comprise various additives in addition to the above components, for example, dispersants and lubricants.

### 3.2.2 Positive electrode current collector

Any general positive electrode current collector for lithium-ion secondary batteries can be adopted as the positive electrode current collector 202. The positive electrode current collector 202 may have at least one shape selected from foil-like, plate-like, mesh-like, punched metal-like, and a foam. The positive electrode current collector 202 may be composed of a metal foil or a metal mesh. Particularly, a metal foil has excellent handleability. The positive electrode current collector 202 may consist of a plurality of foils. Examples of a metal constituting the positive electrode current collector 202 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring oxidation resistance, the positive electrode current collector 202 may comprise Al. The positive electrode current collector 202 may have on the surface thereof some coating layer for the purpose of adjusting resistance. For example, the positive electrode current collector 202 may have a carbon coating layer. The positive electrode current collector 202 may be a metal foil or a substrate plated or vapor-deposited with a metal described above. When the positive electrode current collector 202 consists of a plurality of metal foils, there may be some layer between the plurality of metal foils. The thickness of the positive electrode current collector 202 is not particularly limited, and for example, may be 0.1 µm or more or 1 µm or more, and may be 1 mm or less or 100 µm or less.

### 3.3 Electrolyte layer

An electrolyte layer 300 is arranged between the negative electrode 100 and the positive electrode 200. The electrolyte layer 300 comprises at least an electrolyte. The electrolyte layer 300 may comprise at least one of a liquid electrolyte (electrolytic solution) and a solid electrolyte. When the electrolyte layer 300 comprises a solid electrolyte, the electrolyte layer 300 may further optionally comprise a binder. The contents of the electrolyte and the binder in the electrolyte layer 300 are not particularly limited. Alternatively, the electrolyte layer 300 may comprise a separator for retaining an electrolytic solution and preventing contact between the negative electrode 100 and the positive electrode 200. The thickness of the electrolyte layer 300 is not particularly limited, and for example, may be 0.1 µm or more or 1 µm or more, and may be 2 mm or less or 1 mm or less. The electrolyte layer 300 may consist of one layer, or may consist of a plurality of layers. For example, the electrolyte layer 300 may comprise of a first electrolyte layer arranged on the negative electrode 100 side and a second electrolyte layer arranged on the positive electrode 200 side, and the first electrolyte layer may comprise a first electrolyte and the second electrolyte layer may comprise a second electrolyte. The first electrolyte and the second electrolyte may be of different types from each other. The first electrolyte and the second electrolyte may each be at least one selected from the above oxide solid electrolytes, sulfide solid electrolytes, and solid electrolytes having ion-bonding properties. For example, the first electrolyte layer may comprise at least one of a solid electrolyte having ion-bonding properties and a sulfide solid electrolyte, and the second electrolyte layer may comprise a solid electrolyte having ion-bonding properties. The electrolyte contained in the electrolyte layer 300 may be appropriately selected from among electrolytes (liquid electrolytes and/or solid electrolytes) exemplified as ones that can be contained in the positive electrode active material layer described above. The binder that can be contained in the electrolyte layer 300 may also be appropriately selected from among binders exemplified as ones that can be contained in the negative electrode 100 (first layers 21, second layer 22) and the positive electrode active material layer 201 described above. One type of each of the electrolyte and the binder may be used alone, or two or more types may be used in combination. The separator may be any separator as long as the separator is commonly used in lithium-ion secondary batteries. Examples thereof include those made of resins such as polyethylene (PE), polypropylene (PP), polyester, and polyamide. The separator may be of a single-layer structure, or may be of a multilayer structure. Examples of a separator having a multilayer structure can include separators of a PE/PP two-layer structure and separators of a PP/PE/PP or PE/PP/PE three-layer structure. The separator may consist of a nonwoven fabric such as cellulose nonwoven fabric, resin nonwoven fabric, or glass fiber nonwoven fabric.

### 3.4 Additional configurations

The lithium-ion secondary battery 1000, in addition to the above configuration, may be provided with any general configuration as a lithium-ion secondary battery. For example, the above components of the lithium ion secondary battery 1000 may be housed inside an outer package. Any known outer packaging of a battery can be adopted. In addition, a plurality of the lithium-ion secondary batteries 1000 may be optionally electrically connected and optionally stacked to form a battery pack. In this case, the battery pack may be housed inside any known battery case. The lithium-ion secondary battery 1000 may comprise additional obvious features such as the necessary terminals. Examples of the shape of the lithium-ion secondary battery 1000 can include coin-type, laminate-type, cylindrical, and rectangular.

### 4. Method for manufacturing a lithium-ion secondary battery

The lithium-ion secondary battery 1000 can be manufactured by applying any known method, for example, can be manufactured as follows. However, the method for manufacturing the lithium-ion secondary battery 1000 is not limited to the following method, and each layer may be formed by, for example, dry molding.
(1) A negative electrode is obtained by the above method for manufacturing the negative electrode of the present disclosure.
(2) A positive electrode active material constituting a positive electrode active material layer is dispersed in a solvent to obtain a positive electrode slurry (paste). The solvent used in this case is not particularly limited, and water and various organic solvents can be used. The positive electrode slurry is applied on a surface of a positive electrode current collector using a doctor blade and then dried, whereby a positive electrode active material layer is formed on the surface of the positive electrode current collector to obtain a positive electrode.
(3) Layers are laminated so that an electrolyte layer (solid electrolyte layer or separator) is interposed between the negative electrode and the positive electrode to obtain a laminated body comprising a negative electrode current collector, a negative electrode active material layer, an electrolyte layer, a positive electrode active material layer, and a positive electrode current collector in this order. Additional members such as terminal are attached to the laminated body as needed.
(4) The laminated body is housed in a battery case. In the case of an electrolytic solution battery, a secondary battery is obtained by filling an electrolytic solution into the battery case, immersing the laminated body in the electrolyte solution, and sealing the laminated body within the battery case. Note that in the case of a battery comprising an electrolytic solution, the electrolytic solution may be contained in the negative electrode, the separator, and the positive electrode in the above stage (3).

### 5. Method of improving cycle characteristics of lithium-ion secondary battery

The technique of the present disclosure also has an aspect as a method of improving cycle characteristics of a lithium-ion secondary battery. Specifically, in the method of the present disclosure, the above negative electrode of the present disclosure is adopted in a lithium-ion secondary battery, whereby cycle characteristics of the lithium-ion secondary battery is improved. The details of the configuration of the lithium-ion secondary battery are as described above.

### 6. Vehicle

As described above, the lithium-ion secondary battery of the present disclosure has excellent cycle characteristics. Such a secondary battery can be suitably used in, for example, at least one type of vehicle selected from hybrid vehicles (HEVs), plug-in hybrid vehicles (PHEVs), and battery electric vehicles (BEVs). Specifically, the vehicle of the present disclosure comprises a lithium-ion secondary battery, wherein the lithium-ion secondary battery comprises a negative electrode, a positive electrode, and an electrolyte layer, wherein the negative electrode is the negative electrode of the present disclosure, i.e., has the following cross-sectional configuration: the cross-sectional configuration comprises a negative electrode current collector, a plurality of first layers, and a second layer;
each of the first layers comprises a first negative electrode active material and a first conductive material;
the first negative electrode active material comprises at least one of elemental silicon, a silicon alloy, and a silicon oxide;
the second layer comprises a second negative electrode active material;
the second negative electrode active material comprises graphite;
the second layer does not comprise silicon;
in the cross-sectional configuration, a surface of one side of the negative electrode current collector has a plurality of first regions and a second region between the first regions;
in the cross-sectional configuration, the first layers are in contact with the respective first regions; and
in the cross-sectional configuration, the second layer is in contact with both the second region and surfaces of one side of the first layers.

### EXAMPLES

Hereinafter, the technique of the present disclosure will be further described in detail with reference to the Examples. However, the technique of the present disclosure is not limited to the following Examples.

### 1. Example 1

### 1.1 Production of positive electrode

A positive electrode active material (average particle diameter: 10 µm, LiNi_{0.8}Co_{0.1}Mn_{0.1}O₂), a conductive material (granular acetylene black), and a binder (PVdF) at a mass ratio of 93:4:3 were kneaded with NMP to produce a positive electrode paste. The solid content ratio of the positive electrode paste was adjusted to 65% with NMP. The produced positive electrode paste was applied on a 15 µm-thick Al foil using a doctor blade and dried in a drying furnace at 120 °C for 10 min to obtain a coated body. The single-side basis weight after drying was adjusted to 22 mg/cm². The coated body was then pressed with a roll press machine to obtain a positive electrode comprising a positive electrode active material layer on a surface of the Al foil. The composite density of the positive electrode active material layer after pressing was 2.9 g/cc.

### 1.2 Formation of first layer

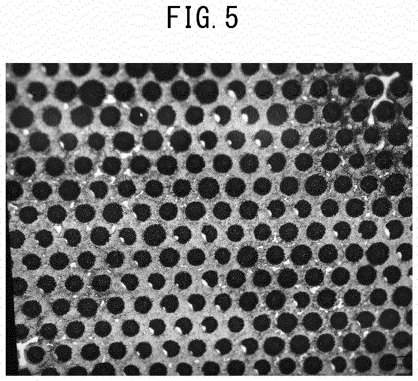

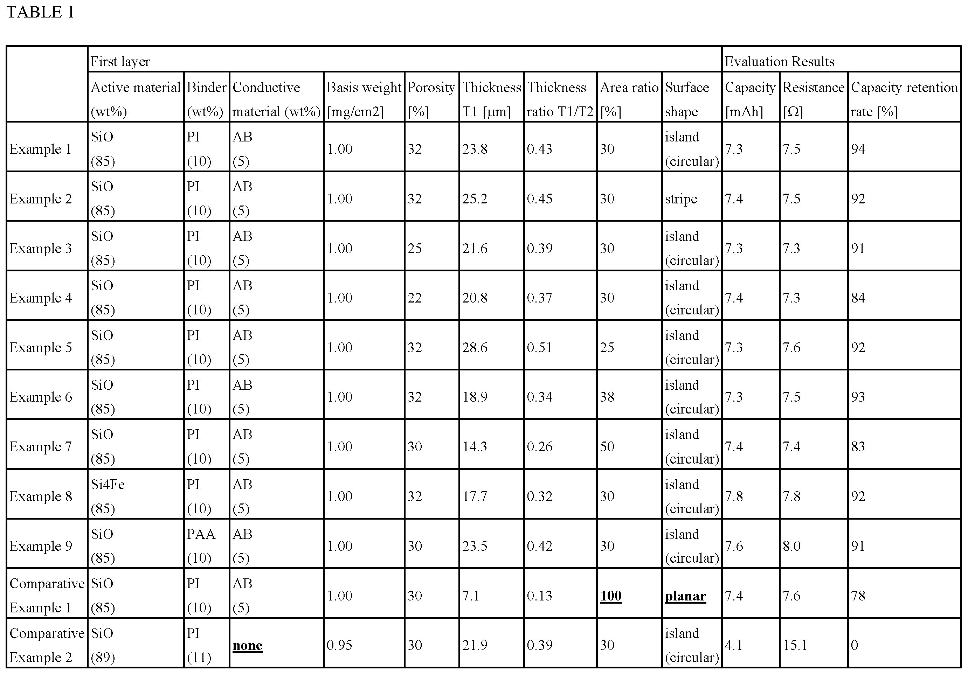

Silicon monoxide fine particles having an average particle diameter of 6 µm were used as a negative electrode active material, polyamic acid was used as a first binder source, and acetylene black was used as a conductive material. These were mixed at a mass ratio of 85:10:5, added to NMP, and kneaded, whereby a first-layer paste was produced. The solid content of the first-layer paste was adjusted to 60% with NMP. A perforated Cu foil (with holes in a circular shape having an average diameter of 200 µm spaced at equal intervals over 30% of the area, a thickness of 35 µm) was laid on a 15 µm-thick Cu foil, and from the top thereof the first-layer paste was applied with a blade coater. The perforated Cu foil was then removed before the coating film dried, whereby a first coated body in which a composite was scattered in an island form on about 30% of the surface of the Cu foil was obtained (refer to FIG. 5). The first coated body was dried at 120 °C for 10 min and then pressed with a roll press to obtain a first pressed body. The first pressed body was then placed in a furnace and baked at 400 °C for 60 min in a vacuum atmosphere to convert the polyamic acid into polyimide to obtain a first laminated body in which a plurality of island-like first layers were scattered on the surface of the Cu foil. The basis weight per unit area of the first layers of the first laminated body was 1.0 mg/cm², the maximum thickness T₁ of the island-like first layers was 23.8 µm, and the composite density of the first layers was 1.4 g/cc.

### 1.3 Formation of second layer

Spherical natural graphite fine particles having an average particle diameter of 17 µm was used as a negative electrode active material, carboxymethylcellulose (CMC) was used as a thickener, and styrene-butadiene rubber (SBR) was used as a second binder. These were mixed at a mass ratio of 98:1:1, added to water, and kneaded, whereby a second-layer paste was prepared. The solid content of the second-layer paste was adjusted to 55% with water. The second-layer paste was then applied to the above first laminated body with a blade coater to obtain a second coated body. The second coated body was dried at 120 °C for 10 min and then pressed with a roll press to obtain a negative electrode comprising first layers and a second layer on a Cu foil. The basis weight of the second layer of the negative electrode was 8 mg/cm², and the maximum thickness of the second layer was 56 µm. Note that the cross-section of the negative electrode was observed with an optical microscope, and as a result, it was confirmed that the thickness of the first layers did not change after formation of the second layer. In addition, it was confirmed that the second layer was in contact with both the surface of the Cu foil and the surfaces of the first layers.

### 1.4 Preparation of coin cell

The above positive electrode and negative electrode were punched out into a disk shape having a diameter of 16 mm, placed facing each other via a separator (polyethylene porous body having a porosity of 55% and a thickness of 20 µm) in a disk shape having a diameter of 19 mm, and installed in a coin-type cell can. 100 µL of an electrolytic solution (EC:FEC:EMC:DMC = 0.2:0.1:0.3:0.4 (Vol ratio), 1 M LIPF₆) was added to the electrode body, the coin can was caulked and sealed, and a coin cell for evaluation was obtained.

### 1.5 Evaluation of coin cell

A charge/discharge test was carried out on the coin cell under the conditions below, and the capacity, resistance, and cycle characteristics (capacity retention rate after 100 cycles = discharge capacity after 100 cycles/initial discharge capacity) of the coin cell were evaluated. Evaluation results are shown in Table 1 below.
- Initial charging and discharging
   Charging: 4.2 V CCCV, 0.1 mA cut, current rate: 1 mA
   Discharging: 2.5 V CCCV, 0.1 mA cut, current value: 1 mA
- Calculation of capacity
   Initial discharge capacity [mAh] was used.
- Measurement of direct current resistance
   Calculated from voltage drop at the start of initial discharging
- Cycle test (100 cycles)
   Charging: 4.2 V CCCV, 0.5 mA cut, current rate: 5 mA
   Discharging: CC 2.5 V cut, current value: 0.5 mA

### 2. Example 2

Except that when forming the first layers, in place of a perforated Cu foil, a Cu foil in which stripes having a length of 5 cm, a width of 210 µm, and a distance between widths (= Cu foil width) of 490 µm were placed was stacked on a 15 µm-thick Cu foil and coated, a negative electrode was produced by the same procedure as in Example 1, a coin cell was produced, and the coin cell was evaluated. Except that the first layers were in a stripe form (band-like), the negative electrode according to Example 2 was the same as the negative electrode according to Example 1. Note that the area ratio of the first layers was 30%, which was the same as in Example 1. Evaluation results are shown in Table 1 below.

### 3. Examples 3 and 4

Except that the pressing pressure on the first layers was adjusted and the porosity was changed, the procedure was the same as in Example 1. Evaluation results are shown in Table 1 below.

### 4. Examples 5 to 7

Except that the ratio of holes in the perforated Cu foil of Example 1 was adjusted and the area ratio of the first layers to the surface of the Cu foil was changed, the procedure was the same as in Example 1. Evaluation results are shown in Table 1 below.

### 5. Example 8

Except that the active material contained in the first layers was changed to Si₄Fe alloy fine particles having an average particle diameter of 3 µm, the procedure was the same as in Example 1. Evaluation results are shown in Table 1 below.

### 6. Example 9

Except that the binder contained in the first layers was changed from a polyimide-based binder to a polyacrylic acid-based binder, the paste solvent was changed to water, and the heat treatment at 400 °C carried out in Example 1 was not carried out, the procedure was the same as in Example 1. Evaluation results are shown in Table 1 below.

### 7. Comparative Example 1

Except that a perforated Cu foil was not used during the production of the first layer and a uniform film was formed planarly on the entire surface of the Cu foil, the procedure was the same as in Example 1. Evaluation results are shown in Table 1 below.

### 8. Comparative Example 2

Except that a conductive material was not used in the first layer and the basis weight was adjusted, the procedure was the same as in Example 1. Evaluation results are shown in Table 1 below.

### 9. Evaluation results

The production conditions (type and amount of active material, type and amount of binder, type and amount of conductive material, basis weight of first layer, porosity of first layer, maximum thickness T₁ of first layer, ratio T₁/T₂ of maximum thickness T₁ of first layer to maximum thickness T₂ of second layer, and area ratio of first layer when area of the entire Cu foil surface was 100%) of the first layer and the evaluation results (capacity, resistance, and capacity retention rate after 100 cycles) of the coin cell for each of Examples 1 to 9 and Comparative Examples 1 and 2 are shown in Table 1 below.

### TABLE 1

**(Table 1)**

| | First layer | | | | | | | | | Evaluation Results | | |
|---|---|---|---|---|---|---|---|---|---|---|---|---|
| | Active material (wt%) | Binder (wt%) | Conductive material (wt%) | Basis weight [mg/cm2] | Porosity [%] | Thickness T1 [µm] | Thickness ratio T1/T2 | Area ratio [%] | Surface shape | Capacity [mAh] | Resistance [Ω] | Capacity retention rate [%] |
| Example 1 | SiO (85) | PI (10) | AB (5) | 1.00 | 32 | 23.8 | 0.43 | 30 | island (circular) | 7.3 | 7.5 | 94 |
| Example 2 | SiO (85) | PI (10) | AB (5) | 1.00 | 32 | 25.2 | 0.45 | 30 | stripe | 7.4 | 7.5 | 92 |
| Example 3 | SiO (85) | PI (10) | AB (5) | 1.00 | 25 | 21.6 | 0.39 | 30 | island (circular) | 7.3 | 7.3 | 91 |
| Example 4 | SiO (85) | PI (10) | AB (5) | 1.00 | 22 | 20.8 | 0.37 | 30 | island (circular) | 7.4 | 7.3 | 84 |
| Example 5 | SiO (85) | PI (10) | AB (5) | 1.00 | 32 | 28.6 | 0.51 | 25 | island (circular) | 7.3 | 7.6 | 92 |
| Example 6 | SiO (85) | PI (10) | AB (5) | 1.00 | 32 | 18.9 | 0.34 | 38 | island (circular) | 7.3 | 7.5 | 93 |
| Example 7 | SiO (85) | PI (10) | AB (5) | 1.00 | 30 | 14.3 | 0.26 | 50 | island (circular) | 7.4 | 7.4 | 83 |
| Example 8 | Si4Fe (85) | PI (10) | AB (5) | 1.00 | 32 | 17.7 | 0.32 | 30 | island (circular) | 7.8 | 7.8 | 92 |
| Example 9 | SiO (85) | PAA (10) | AB (5) | 1.00 | 30 | 23.5 | 0.42 | 30 | island (circular) | 7.6 | 8.0 | 91 |
| Comparative Example 1 | SiO (85) | PI (10) | AB (5) | 1.00 | 30 | 7.1 | 0.13 | **100** | **planar** | 7.4 | 7.6 | 78 |
| Comparative Example 2 | SiO (89) | PI (11) | **none** | 0.95 | 30 | 21.9 | 0.39 | 30 | island (circular) | 4.1 | 15.1 | 0 |

From the results shown in Table 1, the following was found.
(1) When a first layer was laminated planarly over the entire surface of a negative electrode current collector, a second layer was laminated thereon to obtain a negative electrode, and the negative electrode was used to obtain a lithium-ion battery as in Comparative Example 1, cycle characteristics of the lithium-ion battery were insufficient. In Comparative Example 1, by separating the first layer mainly composed of a silicon-based active material and the second layer mainly composed of graphite, it is considered that a strong binder or conductive material could be arranged only around the silicon-based active material. However, in such a configuration, when the silicon-based active material expanded, the entire first layer expanded as a unit. According to the finding of the present inventors, in the first layer, adjacent silicon-based active materials in the plane direction exerted a reaction force on each other due to the expansion, and did not easily expand in the horizontal direction parallel to the negative electrode current collector. Thus, the expansion stress of the first layer was likely to concentrate on the second layer side. Specifically, when the silicon-based active material expanded due to charging, the second layer side of the first layer was likely to collapse and stress likely occurred in the second layer. As a result, it is considered that cracking and peeling occurred in the second layer, and cycle characteristics deteriorated.
(2) When a conductive material was not contained in the first layer as in Comparative Example 2, the capacity of the lithium-ion secondary battery decreased significantly, the resistance increased significantly, and the cycle characteristics deteriorated significantly compared to Comparative Example 1. In Comparative Example 2, it is considered that appropriate conductive paths were not formed in the first layer.
(3) In contrast, when the first layers were scattered in an island form or when the first layers were arranged in a stripe form as in Examples 1 to 9, cycle characteristics of the lithium-ion battery were remarkably improved compared to Comparative Example 1. In Examples 1 to 9, there was an interval between one first layer and another first layer on the surface of one side of the negative electrode current collector. Thus, when the silicon-based active material in the first layers expanded due to charging, the first layers could expand not only in the thickness direction (normal direction) but also in the direction along the plane of the current collector (lateral direction). In other words, it is considered that the expansion of the first layers was distributed in the normal direction and the lateral direction, stress concentrations near the contact portions between the first layers and the second layer were suppressed, and shape collapse and cracking of the second layer did not easily occur. Specifically, it is considered that ion conduction paths and conductive paths in the first layers and the second layer were easily maintained. Further, in Examples 1 to 9, a portion of the second layer comprising graphite having small expansion and contraction was in direct contact with the negative electrode current collector, and consequently paths did not easily break. As a result, it is considered that cycle characteristics of the lithium-ion secondary cells in Examples 1 to 9 were improved.

### 10. Supplementary

In the above Examples, cases where a polyimide (PI)-based binder or a polyacrylic acid (PAA)-based binder was adopted in the first layers were exemplified, but the type of binder in the first layers is not limited thereto. In Examples 1 to 9 and Comparative Example 1, it is considered that even if binders other than those above were used, the expansion amount is decreased by the above mechanism, and cycle characteristics of the lithium-ion secondary battery are improved in Examples 1 to 9 compared to Comparative Example 1. However, in the first layers comprising the silicon-based active material, it is preferable that a strong binder be adopted in order to suppress expansion of the silicon-based active material. In this regard, it is preferable that a polyimide (PI)-based binder or a polyacrylic acid (PAA)-based binder be adopted in the first layers.

In the above Examples, first layers in an island form and first layers in a stripe form were exemplified, but the form of the first layers is not limited thereto. In the cross-sectional configuration of the negative electrode, it is considered that when there is an interval between one first layer and another first layer, the same effect can be achieved.

Although not shown in the above Examples, when a mixed layer of silicon-based active material and graphite is adopted as the negative electrode active material layer (i.e., when silicon-based active material particles and graphite particles are mixed in one layer without separating the first layers comprising the silicon-based active material and the second layer comprising graphite), capacity, resistance, and cycle characteristics cannot be achieved at the same time as described below. First, when a sufficient amount of a strong binder such as a polyimide-based binder is contained in the mixed layer, expansion of the silicon-based active material is suppressed by the binder, resulting in satisfactory cycle characteristics. However, in the mixed layer, it is difficult to preferentially arrange the binder around the silicon-based active material. In order to arrange the necessary and sufficient amount of the binder around the silicon-based active material, it is necessary to increase the absolute amount of the binder in the mixed layer, and the binder is arranged near the graphite, where the binder is not required. Thus, irreversible capacity is increased and resistance is increased. On the other hand, when a flexible binder such as a rubber-based binder is contained in the mixed layer, expansion of the silicon-based active material is not suppressed and cycle characteristics deteriorate. Further, due to the expansion of the silicon-based active material, ion conduction paths and conductive paths are cut off, and capacity and resistance deteriorate.

As described above, by configuring a lithium-ion secondary battery using a negative electrode having the following cross-sectional configuration, cycle characteristics of the lithium-ion secondary battery can be improved.
(1) The cross-sectional configuration comprises a negative electrode current collector, a plurality of first layers, and a second layer, wherein each of the first layers comprises a first negative electrode active material and a first conductive material, the first negative electrode active material comprises at least one of elemental silicon, a silicon alloy, and a silicon oxide, the second layer comprises a second negative electrode active material, the second negative electrode active material comprises graphite, and the second layer does not comprise silicon.
(2) In the cross-sectional configuration, a surface of one side of the negative electrode current collector has a plurality of first regions and a second region between the first regions.
(3) In the cross-sectional configuration, the first layers are in contact with the respective first regions.
(4) In the cross-sectional configuration, the second layer is in contact with both the second region and surfaces of one side of the first layers.

### REFERENCE SIGNS LIST

1000 lithium-ion secondary battery
100 negative electrode for lithium-ion secondary battery
10 negative electrode current collector
21 first layer
22 second layer
200 positive electrode
201 positive electrode active material layer
202 positive electrode current collector
300 electrolyte layer

## Claims

1. A negative electrode for a lithium-ion secondary battery, having the following cross-sectional configuration, wherein:
the cross-sectional configuration comprises a negative electrode current collector, a plurality of first layers, and a second layer;
each of the first layers comprises a first negative electrode active material and a first conductive material;
the first negative electrode active material comprises at least one of elemental silicon, a silicon alloy, and a silicon oxide;
the second layer comprises a second negative electrode active material;
the second negative electrode active material comprises graphite;
the second layer does not comprise silicon;
in the cross-sectional configuration, a surface of one side of the negative electrode current collector has a plurality of first regions and a second region between the first regions;
in the cross-sectional configuration, the first layers are in contact with the respective first regions; and
in the cross-sectional configuration, the second layer is in contact with both the second region and surfaces of one side of the first layers.

2. The negative electrode for a lithium-ion secondary battery according to claim 1, wherein
a porosity of the first layers in a discharging state is 25% or greater.

3. The negative electrode for a lithium-ion secondary battery according to claim 1 or 2, wherein
the first layers are present in an island form on the surface of one side of the negative electrode current collector.

4. The negative electrode for a lithium-ion secondary battery according to claim 1 or 2, wherein
the first layers are present in a stripe form on the surface of one side of the negative electrode current collector.

5. The negative electrode for a lithium-ion secondary battery according to any one of claims 1 to 4, wherein
the first layers comprise a first binder,
the second layer comprises a second binder, and
the first binder is different from the second binder.

6. The negative electrode for a lithium-ion secondary battery according to claim 5, wherein
the first binder has an imide skeleton or comprises polyacrylic acid.

7. The negative electrode for a lithium-ion secondary battery according to any one of claims 1 to 6, wherein
the first conductive material comprises carbon.

8. The negative electrode for a lithium-ion secondary battery according to any one of claims 1 to 7, wherein
the negative electrode current collector comprises copper.

9. The negative electrode for a lithium-ion secondary battery according to any one of claims 1 to 8, wherein
a ratio of the first regions to the surface of one side of the negative electrode current collector is less than 40% by area.

10. The negative electrode for a lithium-ion secondary battery according to any one of claims 1 to 9, wherein
a ratio T₁/T₂ of a maximum thickness T₁ of the first layers to a maximum thickness T₂ of the second layer is 0.6 or less.

11. A method for manufacturing a negative electrode for a lithium-ion secondary battery, comprising the following first step, second step, and third step, wherein:
the first step comprises preparing a negative electrode current collector, wherein in a cross-sectional configuration of the negative electrode current collector, a surface of one side of the negative electrode current collector has a plurality of first regions and a second region between the first regions;
the second step comprises laminating a first layer on the first regions, wherein the first layer comprises a first negative electrode active material and a first conductive material, and the first negative electrode active material comprises at least one of elemental silicon, a silicon alloy, and a silicon oxide; and
the third step comprises laminating a second layer on the negative electrode current collector and the first layer to bring the second layer into contact with both a surface of one side of the first layer and the second region, wherein the second layer comprises a second negative electrode active material, the second negative electrode active material comprises graphite, and the second layer does not comprise silicon.

12. A lithium-ion secondary battery, comprising the negative electrode according to any one of claims 1 to 10, a positive electrode, and an electrolyte layer.

## Patentansprüche

1. Negative Elektrode für eine Lithium-Ionen-Sekundärbatterie mit der folgenden Querschnittskonfiguration, wobei:
die Querschnittskonfiguration einen Stromkollektor der negativen Elektrode, eine Mehrzahl von ersten Schichten und eine zweite Schicht umfasst;
jede der ersten Schichten ein erstes aktives Material der negativen Elektrode und ein erstes leitfähiges Material umfasst;
das erste aktive Material der negativen Elektrode mindestens eines von elementarem Silicium, einer Siliciumlegierung und einem Siliciumoxid umfasst;
die zweite Schicht ein zweites aktives Material der negativen Elektrode umfasst;
das zweite aktive Material der negativen Elektrode Grafit umfasst;
die zweite Schicht kein Silicium umfasst;
in der Querschnittskonfiguration eine Oberfläche einer Seite des Stromkollektors der negativen Elektrode eine Mehrzahl von ersten Gebieten und ein zweites Gebiet zwischen den ersten Gebieten aufweist;
in der Querschnittskonfiguration die ersten Schichten mit den jeweiligen ersten Gebieten in Kontakt sind; und
in der Querschnittskonfiguration die zweite Schicht sowohl mit dem zweiten Gebiet als auch Oberflächen einer Seite der ersten Schichten in Kontakt ist.

2. Negative Elektrode für eine Lithium-Ionen-Sekundärbatterie nach Anspruch 1, wobei
eine Porosität der ersten Schichten in einem Entladezustand 25 % oder mehr beträgt.

3. Negative Elektrode für eine Lithium-Ionen-Sekundärbatterie nach Anspruch 1 oder 2, wobei
die ersten Schichten in einer Inselform auf der Oberfläche einer Seite des Stromkollektors der negativen Elektrode vorliegen.

4. Negative Elektrode für eine Lithium-Ionen-Sekundärbatterie nach Anspruch 1 oder 2, wobei
die ersten Schichten in einer Streifenform auf der Oberfläche einer Seite des Stromkollektors der negativen Elektrode vorliegen.

5. Negative Elektrode für eine Lithium-Ionen-Sekundärbatterie nach einem der Ansprüche 1 bis 4, wobei die ersten Schichten ein erstes Bindemittel umfassen,
die zweite Schicht ein zweites Bindemittel umfasst und das erste Bindemittel sich von dem zweiten Bindemittel unterscheidet.

6. Negative Elektrode für eine Lithium-Ionen-Sekundärbatterie nach Anspruch 5, wobei
das erste Bindemittel ein Imidgerüst aufweist oder Polyacrylsäure umfasst.

7. Negative Elektrode für eine Lithium-Ionen-Sekundärbatterie nach einem der Ansprüche 1 bis 6, wobei das erste leitfähige Material Kohlenstoff umfasst.

8. Negative Elektrode für eine Lithium-Ionen-Sekundärbatterie nach einem der Ansprüche 1 bis 7, wobei der Stromkollektor der negativen Elektrode Kupfer umfasst.

9. Negative Elektrode für eine Lithium-Ionen-Sekundärbatterie nach einem der Ansprüche 1 bis 8, wobei ein Verhältnis der ersten Gebiete zu der Oberfläche einer Seite des Stromkollektors der negativen Elektrode weniger als 40 Flächen-% beträgt.

10. Negative Elektrode für eine Lithium-Ionen-Sekundärbatterie nach einem der Ansprüche 1 bis 9, wobei ein Verhältnis T₁/T₂ einer maximalen Dicke T₁ der ersten Schichten zu einer maximalen Dicke T₂ der zweiten Schicht 0,6 oder weniger beträgt.

11. Verfahren zum Herstellen einer negativen Elektrode für eine Lithium-Ionen-Sekundärbatterie, umfassend den folgenden ersten Schritt, zweiten Schritt und dritten Schritt, wobei:
der erste Schritt Herstellen eines Stromkollektors der negativen Elektrode umfasst, wobei in einer Querschnittskonfiguration des Stromkollektors der negativen Elektrode eine Oberfläche einer Seite des Stromkollektors der negativen Elektrode eine Mehrzahl von ersten Gebieten und ein zweites Gebiet zwischen den ersten Gebieten aufweist;
der zweite Schritt Laminieren einer ersten Schicht auf die ersten Gebiete umfasst, wobei die erste Schicht ein erstes aktives Material der negativen Elektrode und ein erstes leitfähiges Material umfasst und das erste aktive Material der negativen Elektrode eines von elementarem Silicium, einer Siliciumlegierung und einem Siliciumoxid umfasst; und
der dritte Schritt Laminieren einer zweiten Schicht auf den Stromkollektor der negativen Elektrode und die erste Schicht umfasst, um die zweite Schicht sowohl mit einer Oberfläche einer Seite der ersten Schicht als auch dem zweiten Gebiet in Kontakt zu bringen, wobei die zweite Schicht ein zweites aktives Material der negativen Elektrode umfasst, das zweite aktive Material der negativen Elektrode Grafit umfasst und die zweite Schicht kein Silicium umfasst.

12. Lithium-Ionen-Sekundärbatterie, umfassend die negative Elektrode nach einem der Ansprüche 1 bis 10, eine positive Elektrode und eine Elektrolytschicht.

## Revendications

1. Électrode négative pour une batterie secondaire au lithium-ion, présentant la configuration de section transversale suivante, dans laquelle :
la configuration de section transversale comprend un collecteur de courant d'électrode négative, une pluralité de premières couches et une seconde couche ;
chacune des premières couches comprend un premier matériau actif d'électrode négative et un premier matériau conducteur ;
le premier matériau actif d'électrode négative comprend au moins un des éléments suivants : silicium élémentaire, alliage de silicium et oxyde de silicium ;
la seconde couche comprend un second matériau actif d'électrode négative ;
le second matériau actif d'électrode négative comprend du graphite ;
la seconde couche ne comprend pas de silicium ;
dans la configuration de section transversale, une surface d'un côté du collecteur de courant d'électrode négative présente une pluralité de premières régions et une seconde région entre les premières régions ;
dans la configuration de section transversale, les premières couches sont en contact avec les premières régions respectives ; et
dans la configuration de section transversale, la seconde couche est en contact à la fois avec la seconde région et les surfaces d'un côté des premières couches.

2. Électrode négative pour une batterie secondaire au lithium-ion selon la revendication 1, dans laquelle
la porosité des premières couches dans un état de décharge est supérieure ou égale à 25 %.

3. Électrode négative pour une batterie secondaire au lithium-ion selon la revendication 1 ou 2, dans laquelle les premières couches sont présentes en forme d'îlot sur la surface d'un côté du collecteur de courant d'électrode négative.

4. Électrode négative pour une batterie secondaire au lithium-ion selon la revendication 1 ou 2, dans laquelle les premières couches sont présentes en forme de bande sur la surface d'un côté du collecteur de courant d'électrode négative.

5. Électrode négative pour batterie secondaire au lithium-ion selon l'une quelconque des revendications 1 à 4, dans laquelle
les premières couches comprennent un premier liant,
la seconde couche comprend un second liant, et
le premier liant est différent du second liant.

6. Électrode négative pour une batterie secondaire au lithium-ion selon la revendication 5, dans laquelle
le premier liant présente un squelette imide ou comprend de l'acide polyacrylique.

7. Électrode négative pour batterie secondaire au lithium-ion selon l'une quelconque des revendications 1 à 6, dans laquelle
le premier matériau conducteur comprend du carbone.

8. Électrode négative pour batterie secondaire au lithium-ion selon l'une quelconque des revendications 1 à 7, dans laquelle
le collecteur de courant d'électrode négative comprend du cuivre.

9. Électrode négative pour batterie secondaire au lithium-ion selon l'une quelconque des revendications 1 à 8, dans laquelle
un rapport entre les premières régions et la surface d'un côté du collecteur de courant d'électrode négative est inférieur à 40 % en surface.

10. Électrode négative pour batterie secondaire au lithium-ion selon l'une quelconque des revendications 1 à 9, dans laquelle
le rapport T₁/T₂ entre l'épaisseur maximale T₁ des premières couches et l'épaisseur maximale T₂ de la seconde couche est inférieur ou égal à 0,6.

11. Procédé de fabrication d'une électrode négative pour une batterie secondaire au lithium-ion, comprenant les première étape, deuxième étape et troisième étape suivantes, dans lequel :
la première étape comprend la préparation d'un collecteur de courant d'électrode négative, dans lequel, dans une configuration de section transversale du collecteur de courant d'électrode négative, une surface d'un côté du collecteur de courant d'électrode négative présente une pluralité de premières régions et une seconde région entre les premières régions ;
la deuxième étape comprend la stratification d'une première couche sur les premières régions, dans laquelle la première couche comprend un premier matériau actif d'électrode négative et un premier matériau conducteur, et le premier matériau actif d'électrode négative comprend au moins l'un des éléments suivants : silicium élémentaire, alliage de silicium et oxyde de silicium ; et
la troisième étape comprend la stratification d'une seconde couche sur le collecteur de courant d'électrode négative et la première couche pour amener la seconde couche en contact à la fois avec une surface d'un côté de la première couche et la seconde région, dans laquelle la seconde couche comprend un second matériau actif d'électrode négative, le second matériau actif d'électrode négative comprend du graphite, et la seconde couche ne comprend pas de silicium.

12. Batterie secondaire au lithium-ion, comprenant l'électrode négative selon l'une quelconque des revendications 1 à 10, une électrode positive et une couche d'électrolyte.
